# EUROPÄISCHE PATENTSCHRIFT

(11) **EP 3 112 433 B1**
(45) Veröffentlichungstag und Bekanntmachung des Hinweises auf die Patenterteilung: **31.01.2018**
(21) Anmeldenummer: 16173997.4
(22) Anmeldetag: 10.06.2016
(51) Int. Cl.: C09J 163/00

(54) **EPOXIDHARZ-KLEBSTOFF ZUR HERSTELLUNG EINER FALZVERKLEBUNG**
EPOXY RESIN ADHESIVE FOR PRODUCING A FOLDED ADHESION
ADHESIF A BASE DE RESINE EPOXYDE DESTINE A FABRIQUER UNE LIAISON PAR PLIAGE

(30) Priorität: 29.06.2015 DE 102015212088
(43) Veröffentlichungstag der Anmeldung: 04.01.2017
(73) Patentinhaber: Volkswagen Aktiengesellschaft, 38440 Wolfsburg (DE)
(72) Erfinder: Wiese, Erk, 32427 Minden (DE); Behrendt, Reiner Nico, 39539 Havelberg (DE)

(56) Entgegenhaltungen:
- EP-B1- 2 134 799

## Beschreibung

Die Erfindung betrifft einen Epoxidharz-Klebstoff zur Herstellung einer Falzverklebung sowie ein dazugehöriges Verfahren zur Herstellung einer Falzverklebung.

Die in einer Falzklebverbindung eingesetzten Strukturklebstoffe verbessern nahezu gewichtsneutral durch die flächige Kraftübertragung der Klebverbindung die Steifigkeit, Schwingfestigkeit und vor allem die Crashstabilität der Fahrzeugkarosserie. Dies kann alternativ nur durch eine Blechdickenerhöhung in Kombination mit entsprechender Fügetechnik erreicht werden. Zudem besitzen Klebstoffe eine isolierende Wirkung gegenüber korrosiven Medien. Bei Anbauteilen werden zusätzlich Unterfütterungsklebstoffe eingebracht, die dazu dienen, das Innenteil vom Außenteil zu isolieren und ein Aufeinanderschlagen im Fahrzeugbetrieb zu verhindern.

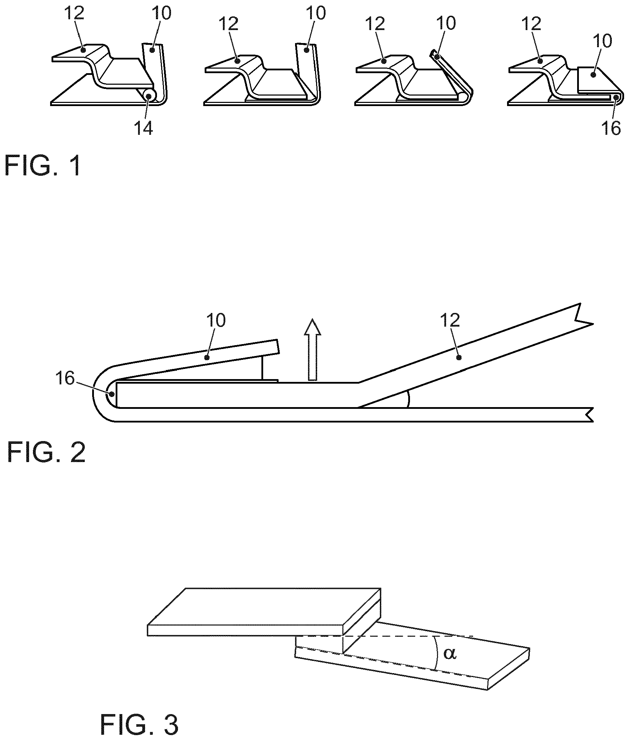

Der eigentliche Falzklebprozess lässt sich in drei Prozessschritte unterteilen: dem Anwinkeln des Außenblechs, dem Vorfalzen und dem Fertigfalzen. Um einen Prozessschritt zu sparen, ist der erste Schritt, das Anwinkeln des Außenblechs, also die Erzeugung des Bords, als Tiefziehoperation zur flächigen Formgebung häufig bereits in der Halbzeugfertigung im Presswerk integriert. Das Vor- und Fertigfalzen wird in einer Falzpresse oder durch einen Rollfalzprozess (beim Rollfalzen besteht die Vorfalzoperation aus zwei Prozessschritten) durchgeführt. Der prinzipielle Prozessablauf ist nochmals schematisch in Figur 1 dargestellt. Von links beginnend ist in zwei Darstellungen der Teilschritt des Schachtelns eines bereits angewinkelten Außenblechs 10 und eines Innenblechs 12 dargestellt. Es folgt der Teilschritt der Vorfalz und der ganz rechts dargestellten Fertigfalz, wobei ein Klebstoff 14 im Zuge der Verarbeitung eine Klebstoffschicht 16 zwischen den beiden Blechen ausbildet.

Während des Biegeprozesses beim Falzen um einen Winkel von 180° erfährt der Blechwerkstoff eine charakteristische inhomogene Formänderungsverteilung. In Verbindung mit dem elastisch-plastischen Verhalten des Metallwerkstoffs führt dies zu rückfederungsbedingten Formabweichungen, die eine unerwünschte Abweichung der Ist-Kontur von der Soll-Kontur zur Folge haben (siehe Figur 2). Dieses Rückfederungsverhalten des gefalzten Außenbleches 10 verursacht innerhalb der Klebschicht 16 der Falzklebverbindung ein wiederkehrendes Fehlerbild, das als Borkenkäfereffekt oder Mäanderstruktur bezeichnet wird. Diese Fehlstellen führen somit zu einer Beeinträchtigung des Eigenschaftsprofils der Falzklebung hinsichtlich Festigkeit, Steifigkeit und Alterungsbeständigkeit, da durch die Schädigung der Klebschicht 16 sind die Eigenschaften der Fügeverbindung hinsichtlich Dichtigkeit gegenüber eindringenden Medien und zu übertragenden Kräften nur unzureichend ausgeprägt.

In der Praxis greifen mechanische Belastungen in der Falz zumeist nicht parallel an, wie es beispielsweise in klassischen Zugscherprüfungen der Fall ist. In Versuchen hat es sich nun gezeigt, dass schon bei geringem Versatz um wenige Grad eines Schädigungswinkels die Fehlstellenbildung bei konventionellen Epoxidharz-Klebstoffen stark ansteigt.

EP 0 029 008 B1 beschreibt einen wärmehärtenden Epoxidharz-Klebstoff, der einen flüssigen Epoxidharz mit mehr als einer Epoxygruppe, Dicyandiamid als Härter, einen im Epoxidharz unlöslichen Thermoplast sowie weitere übliche Additive für Klebstoffe enthält. Als Epoxidharz können beispielsweise Diglycidylether von hydriertem Bisphenol A oder F verwendet werden. Der Klebstoff eignet sich insbesondere zum Verkleben von Falznähten.

EP 2 134 799 B1 offenbart ein Verfahren zur Herstellung einer Bördelfalzverklebung unter Verwendung eines Epoxidharz-Klebstoffs, dessen Viskosität > 900 Pas beträgt. Der Epoxidharz-Klebstoff kann als einkomponentiger hitzehärtender Epoxidharz-Klebstoff ausgeführt sein und enthält einen Epoxidharz mit mehr als einer Epoxidgruppe pro Molekül und einen Härter. Ferner kann das Gemisch ein Polyurethanprepolymer und gegebenenfalls weitere Additive enthalten. Durch den hochviskosen Klebstoff soll eine Volumenvergrößerung, die durch die Rückfederung bei der Bördelfalzverklebung entsteht, kompensiert werden. In der Folge treten deutlich weniger Luftblasen und Kanäle (auch als Mäander bezeichnet) in der Falzklebung auf.

Ein oder mehrere der genannten Probleme im Stand der Technik lassen sich mit Hilfe des erfindungsgemäßen Epoxidharz-Klebstoffes zur Herstellung einer Falzverklebung vermeiden oder zumindest mindern. Der erfindungsgemäße Epoxidharz-Klebstoff weist dazu die folgende Molmassenverteilung auf:
Mₙ: 400 - 600 g/mol
M_{w}: 3.000 - 4.000 g/mol
PDI: 6,0 - 8,5
wobei Mₙ für die zahlenmittlere molare Masse und M_{w} für die gewichtsmittlere molare Masse steht und sich der Polydispersitätsindex PDI aus dem Quotienten M_{w}/Mₙ ergibt.

Innerhalb der oben genannten Grenzen ist die folgende Molmassenverteilung (oder synonym Molekulargewichtsverteilung) bevorzugt:
Mₙ: 400 - 550 g/mol
M_{w}: 3.500 - 4.000 g/mol
PDI: 6,5 - 8,5.

Besonders bevorzugt ist die Molmassenverteilung:
Mₙ: 400 - 500 g/mol
M_{w}: 3.500 - 4.000 g/mol
PDI: 7,5 - 8,5.

Polymere sind kettenartige Moleküle, die entweder aus der gleichen oder verschiedenen Wiederholungseinheiten aufgebaut sind. Sie bestehen in der Regel aus einer Mischungen von polymeren Verbindungen mit unterschiedlichen Kettenlängen, d.h. unterschiedlichen molaren Massen. Für Polymere werden daher gemittelte Werte als Molmasse angegeben. Gebräuchlich sind die zahlenmittlere molare Masse (Mₙ), die gewichtsmittlere molare Masse (M_{w}) und die viskositätsmittlere molare Masse (M_{η}). Physikalische, mechanische und rheologische Eigenschaften werden oft durch die Polydispersität (PDI; auch Polymolekularität) als Verhältnis von Gewichtsmittel zu Zahlenmittel. bestimmt. Die Polydispersität PDI ist ein Maß für die Breite einer Molmassenverteilung. Je größer PDI ist, desto breiter ist die Molmassenverteilung. Die Breite der Molmassenverteilung ist wichtig für die Beurteilung der physikalischen, mechanischen und rheologischen Eigenschaften. Die Molmassenverteilung bezieht sich auf die polymeren Bestandteile des Epoxidharz-Klebstoff, insbesondere des Epoxidharzes.

Der Erfindung liegt nun die Erkenntnis zugrunde, dass die Einhaltung bestimmter Bereichsgrenzen für die zahlenmittlere molare Masse (Mₙ), die gewichtsmittlere molare Masse (M_{w}) und die Polydispersität (PDI) zu einem Klebstoffsystem führt, das den spezifischen Erfordernissen der Falzverklebung genügt. Mit anderen Worten, durch gezielte Polymerfraktionierung lässt sich der Fehlstellenbildung in der Falzklebung auch bei mechanischer Belastung unter einem bestimmten Schädigungswinkel entgegenwirken. Unter Polymerfraktionierung versteht man dabei die gezielte Veränderung der Molmassenverteilung. Die Polymerfraktionierung für analytische Zwecke erfolgt unter anderem mittels der Gelpermeationschromatographie (GPC). Diese Methode diente vorliegend zur Bestimmung der Molmassenverteilung. Ebenso kann eine Analyse der Molmassenverteilung mittels GPC erfolgen. Bei der GPC kommt eine Säule aus mit einem Lösungsmittel gequollenem, polymeren Material zum Einsatz. Durch die Quellung der Säule bilden sich feine Poren, die für die Bestimmung der Größe von einzelnen Polymerketten herangezogen werden. Entlang der Säule zeigen die Porendurchmesser einen Gradienten, d.h. die Poren werden entlang der Säule kleiner oder größer. Zudem werden häufig mehrere Säulen verwendet. Die GPC nutzt nun den Umstand, dass Polymerketten in einem spezifischem Lösungsmittel (Theta-Lösungsmittel bzw. Tetha-Bedingungen) als Polymerknäule vorliegen, deren Durchmesser beziehungsweise Radien (Gyrationsradius) mit der Kettenlänge des Makromoleküls korreliert. Die so gebildeten Poren können dann mittels Polymeren, deren Molmasse herstellungsbedingt bekannt ist (Polymer-Standards) kalibriert werden. Häufig werden hierfür sogenannte Polystyrol-Standards verwendet. Für die Bestimmung der Molmassen wird die Polymerprobe mit der zu bestimmenden Molmassenverteilung ebenfalls in Lösungsmittel aufgelöst und anschließend so mit den Poren der GPC-Säule in Kontakt gebracht, dass die Polymerknäule in den passenden Poren der GPC-Säule "festgehalten" werden. Durch die vorhergehende Kalibrierung ist bekannt, welche Porengröße welchem Molekulargewicht, bezogen auf den Polymer-Standard, entspricht. Im Anschluss werden die zu bestimmenden Polymere von der Säule - Größenfraktion für Größenfraktion - wieder heruntergespült und die Konzentration bestimmt. Als Ergebnis erhält man relative Molmassen, bezogen auf den Polymer-Standard (Polystyrol-Standard).

Der erfindungsgemäße Ansatz zur Verbesserung der Klebstoffeigenschaften von Epoxidharz-Klebstoffen für die Falzverklebung ist vollkommen neu und in der Literatur bisher auch nicht ansatzweise beschrieben. Die optimalen Wertebereiche für die charakteristischen Molmassen wurden empirisch ermittelt.

Der erfindungsgemäße Epoxidharz-Klebstoff wird demnach in an sich konventioneller Art und Weise für die Falzverklebung verwendet, so dass auf bereits bestehenden Arbeitsabläufen aufgebaut werden kann.

Der erfindungsgemäße Epoxidharz-Klebstoff enthält zumindest einen Epoxidharz mit mehr als einer Epoxidgruppe pro Molekül. Bei einkomponentigen Epoxidharz-Klebstoffen ist zudem ein Härter vorhanden. Ein Anteil des Epoxidharzes am Epoxidharz-Klebstoff liegt bei vorzugsweise 10 - 95 Gew.%, besonders bevorzugt 30 - 90 Gew.%, insbesondere 40 - 85 Gew.%. Der Anteil des Härters am Epoxidharz-Klebstoff liegt bei vorzugsweise 0.5 - 10 Gew.%, besonders bevorzugt 1 - 8 Gew.%. Der Epoxidharz-Klebstoff kann weitere Additive enthalten, wie Thixotropiermittel, Flüssigkautschuk, Zähigkeitsverbesser, Reaktivverdünner, Hitze- und Lichtstabilisatoren, Weichmacher, Lösungsmittel, Treibmittel, Farbstoffe, Haftvermittler und Füllstoffe. Der kumulierte Anteil der Additive am Epoxidharz-Klebstoff liegt bei vorzugsweise 0.5 - 20 Gew.%, besonders bevorzugt 1 - 10 Gew.%.

Epoxidharze werden durch die Umsetzung von einer Verbindung mit zwei oder mehr Hydroxylgruppen und Epichlorhydrin hergestellt. Derartige Epoxidharze werden glycidyl-basierte Epoxidharze genannt. Die Hydroxylgruppe kann dabei von aliphatischen Diolen, Polyolen, phenolischen Verbindungen oder Dicarbonsäuren stammen. Als mehrwertige Alkohole werden Verbindungen wie 1,4-Butandiol eingesetzt. Di- und Polyole führen zu Diglycid-Polyethern. Eine weitere Möglichkeit zur Herstellung von Epoxidharzen ist die Umsetzung aliphatischer oder cycloaliphatischer Alkene mit Persäuren. Bevorzugt sind Bisphenol-basierte Epoxidharze, insbesondere Polymerisationskondensate aus Bisphenol A und Epichlorhydrin (präpolymeres Kondensationsprodukt).

Ein weiterer Aspekt der Erfindung betrifft ein Verfahren zur Herstellung einer Falzverklebung. Das Verfahren umfasst die Schritte:
a) Bereitstellen eines wie zuvor beschriebenen Epoxidharz-Klebstoffs;
b) Auftragen des Epoxidharz-Klebstoffs auf ein Innenblech und/oder Außenblech im Bereich der zu erstellenden Falzverklebung;
c) Bördeln des Außenblechs um das Innenblech, so dass im Innenraum des Bördelfalzes Epoxidharz-Klebstoff vorhanden ist;
d) Verpressen des Bördelfalzes; und
e) Thermisches Aushärten des Epoxidharz-Klebstoffs.

Weitere bevorzugte Ausführungsformen der Erfindung sind den Unteransprüchen sowie der nachfolgenden Beschreibung zu entnehmen.

Die Erfindung wird nachfolgend in Ausführungsbeispielen anhand der zugehörigen Zeichnungen erläutert. Es zeigen:
- Figur 1: illustriert schematisch einzelne Teilschritte der Falzklebung.
- Figur 2: illustriert schematisch das Rückfederungsverhalten des gefalzten Außenblechs.
- Figur 3: zeigt eine Prinzip-Skizze zur Veranschaulichung des Fehlerwinkels α in Zugscherproben.

### Ausführungsbeispiel:

Als Werkstoff zur Herstellung der Fügepartner wurde der Blechwerkstoff CP-W 800 ZE75/75 AO verwendet. Die aus dem Werkstoff hergestellten Substrate wiesen neben den Normdaten eine auf die Klebstoffe angepasste Klebschichtdicke von 0,3 mm auf. Die Anpassung der Blechstärke auf 2 mm und die Wahl des Werkstoffes sind darauf zurückzuführen, dass die Einflüsse des zur Nachbildung der Rückfederung eingebrachten Biegemomentes in den elastischen und plastischen Bereichen möglichst gering ausfallen sollten, um eine effektive Bewertung der Klebstoffeigenschaften zu erlangen. Ferner betrug die Fügepartnerlänge 150 mm ± 0.25 mm und die Überlappungslänge war 12.5 mm ± 0.25 mm.

Vor der Applikation des Klebstoffes erfolgte eine Entfettung der Substrate durch Abwischen mit Aceton. Um repräsentative Ergebnisse zu erhalten, wurde der Schmierstoff ANTICORIT PL 3802-39 S in einer Mengenauflage von 3 g/m² aufgetragen. Zur Aufbringung auf das entfettete Substrat wurde zunächst eine Emulsion im Verhältnis 1:6 von ANTICORIT PL 3802-39 S und n-Hexan als Lösungsmittel hergestellt. Mit Hilfe dieser Emulsion wurden die Klebflächen benetzt. Nach Verflüchtigung des n-Hexans wurde mithilfe des Ölmengenmessgerätes Ölauflagensensor IOS NG der Firma Infralytic GmbH überprüft, ob die gewünschte Ölmenge aufgetragen war. Wurde der Zielwert von 3 g/m² dabei nicht erreicht, erfolgt eine erneute Entfettung des Substrates mit anschließender, definierter und kontrollierter Aufbringung des Schmierstoffes.

Im Anschluss an die Substratvorbehandlung erfolgte der Einsatz der Epoxidharz-Klebstoffe. Diese wurden mittels des Kartuschenvorwärmgerätes KVG-2 der Firma Beyer + Otto GmbH etwa 60 Minuten vor Ihrem Einsatz auf eine Temperatur von 55 °C aufgewärmt. Der Auftrag des Klebstoffes erfolgte im Anschluss mit einem beheizbaren und pneumatisch betriebenen Klebstoffapplikationsgerät der Firma Beyer + Otto GmbH des Typs TS-215/HN.
Zur Sicherstellung der geforderten Ausrichtung der Substrate zueinander wurde in der Vorbereitung eine entsprechende Vorrichtung konstruiert, die die DIN 1465 wahrt.

Im Anschluss an die Klebung der beiden Fügepartner wurde der Verbund mit Halteklammern gesichert, um die nötige Handlingfestigkeit und damit einhergehend eine dauerhafte Ausrichtung der Fügepartner zueinander zu gewährleisten. Zur Untersuchung der Ausbildung von Fehlstellen unter dem Einfluss von Rückfederungen der Fügepartner des Klebstoffes wurden weiterhin mit einem Fehlerwinkel α beaufschlagte Zugscherproben angefertigt. Hierzu wurden die Proben zunächst als Zugscherproben in Anlehnung an DIN 1465 hergestellt und anschließend mit Hilfe einer dazu angefertigten Vorrichtung um einen definierten Fehlerwinkel α geschädigt; siehe dazu die Prinzipskizze der Figur 3.

Der Klebstoff war, wie im Karosseriebau üblich, zum Zeitpunkt der Prüfung noch nicht ausgehärtet. Die verwendete Vorrichtung wies eine Kapazität von fünf Prüfkörpern auf. Bei gleichzeitiger Fertigung aller Proben eines Klebstoffes konnten ferner Chargenvariationen durch prozessbedingte Einflüsse vermieden werden. Der Fehlerwinkel war über die Vorrichtung einstellbar. Neben einem Fehlerwinkel von vier Grad für einige Testreihen wurden ebenso Vorrichtungen mit Fehlerwinkeln von einem Grad, zwei Grad und drei Grad gefertigt und genutzt. Grund für die Wahl dieser speziellen Fehlerwinkel waren vorangegangene interner Untersuchungen, die einen Anstieg von Schädigungen innerhalb dieser Bereiche bei mechanischer Belastung belegten.

Um verschiedene Epoxidharz-Klebstoffe in Bezug auf eine mögliche Fehlstellenbildung beim "Rückfedern" im Falzprozess messtechnisch zu charakterisieren, wurden Tack-Untersuchungen vorgenommen. Den Tack-Untersuchungen lag der Ansatz zu Grunde, dass ein nicht ausgehärteter Klebstoff, der sowohl zu einem langen Fadenzug neigt als auch eine hohe Klebrigkeit aufweist, gute Fließ- und Verformungsfähigkeiten, sowie eine ausreichende Festigkeit besitzen muss. Nur durch ausreichende Fließfähigkeit und Festigkeit des Klebstoffes kann ausreichend Substanz in die Verjüngung des Fadens nachfließen, wodurch ein frühes Abreißen des Fadens beziehungsweise ein zu starkes Verjüngen des Fadens verhindert werden. Die bei der Klebstoffverstreckung in Form von säulenartigen Strukturen auftretenden Mäander können mit der Ausbildung eines Fadens verglichen werden. Um einer Querschnittsminderung bei der Entstehung eines Fadens durch zu starke Verjüngung entgegenzuwirken, muss der Klebstoff über eine gute Spaltüberbrückung verfügen; d.h.es muss dem Klebstoff möglich sein, in die Verjüngung nachzufließen. Ein Klebstoff mit hohem Fadenzug und hoher Klebrigkeit müsste dementsprechend bei einer Klebstoffverstreckung zu einer geringeren Fehlstellenausbildung (Mäanderbildung) in der Klebschicht neigen.

Für die Tack-Eigenschaften gibt es daher klebstoffseitig zwei wesentliche Stellgrößen. Auf der einen Seite, muss eine gewisse Festigkeit des ungehärteten Klebstoffs gegeben sein, um eine ausreichende Kohäsion der Klebstoffmasse bei der Mäanderbildung zu gewährleisten und auf der anderen Seite muss eine gewisse Fließfähigkeit des Klebstoffes dafür sorgen, dass bei der mechanischen Beanspruchung des Klebstoffs ein ausreichender Nachfluss des Klebstoffs gewährleistet ist.

Im Hinblick auf die Erfindung galt es nun, Molmassenverteilungen (oder auch Molekulargewichtsverteilungen) von Klebstoffen so zu wählen, dass beiden genannten Stellgrößen jeweils im ausreichendem Maße Rechnung getragen wird, d.h. durch die Wahl entsprechender Molmassenverteilungen ein optimales Verhältnis zwischen Fließfähigkeit und Festigkeit einzustellen und somit der Mäanderbildung entgegen zu wirken. Es wurde von einem Zusammenhang zwischen Molmassenverteilung, Fließverhalten, Festigkeit und Fehlstellenbildung ausgegangen.

Es wurden fünf verschiedene Typen eines Strukturklebstoffs in unausgehärteter Form hinsichtlich der Molekulargewichtsverteilung untersucht. Es handelte sich um 1-Komponenten-Epoxidharz-Klebstoffe. Der Epoxidharz wies mehr als einer Epoxidgruppe pro Molekül auf und war ein Kondensationsprodukt von Bisphenol-A und Epichlorhydrin mit geringen Anteilen von 2,2,-Dimethyloctansäureglycidylester. Als Referenzprobe wurde der kommerziell erhältliche Strukturklebstoffs Betamate 1440 von Dow Chemicals Inc. verwendet.

Die fünf Strukturklebstoffe mit unterschiedlicher Molmassenverteilung sind nachfolgend als Proben A - D benannt, bei denen die zahlenmittlere molare Masse Mₙ, die gewichtsmittlere molare Masse M_{w} und damit der Polydispersitätsindex PDI als dem Quotienten M_{w}/Mₙ variiert worden ist.

Die konkreten Molmassenverteilungen wurden durch Gelpermeationschromatographie (GPC) der unausgehärteten und zuvor gereinigten Proben aus Epoxidharz-Klebstoff verifiziert. Dazu wurden die Proben jeweils in Tetrahydrofuran gelöst, in unterschiedlich große Poren einer Polystyrol-Säulenkombination absorbiert, um anschließend eluiert zu werden. Aus den Elugrammen wurden die Molmassenverteilungen bestimmt, aus denen dann die charakteristischen Zahlenmittel - d.h. zahlengemittelte molare Masse (M_{w}) und gewichtsmittlere molare Masse (M_{w}) - und die Polydispersität PDI abgeleitet wurden. Alle Molmassen sind auf Polystyrol bezogen. Die Referenzprobe zeigte folgende Molmassencharakteristik:
Referenzprobe: Mₙ = 526 g/mol; M_{w} = 4320 g/mol und PDI = 8,21.

Die Referenzprobe zeigte in mikroskopischen Untersuchungen unerwünschte Fehlstellenbildung (Mäander).

In Bezug auf die Referenz wurde nun eine Probe A mit etwas niedrigerem Mₙ, dafür höherem M_{w} und somit auch höherer PDI untersucht:
Probe A: Mₙ = 512 g/mol, M_{w} = 4510 g/mol und PDI = 8,81.

Mikroskopisch gesehen handelte es sich bei der Probe A also um eine Probe mit insgesamt etwas weniger Makromolekülen, dafür jedoch mit etwas größeren Makromolekülen. Bei der Probe A konnte zunächst zwar ein verbessertes Abgleitverhalten und gute Dehnbarkeit festgestellt werden, jedoch war der Materialnachfluss noch unzureichend, um eine verbessertes Fehlerbild (Mäanderstruktur) zu bewirken.

Es wurde daher eine weitere Probe, Probe B, untersucht. Diese wies wiederrum ein verringertes Mₙ, sowie ein höheres M_{w} und eine höhere Polydispersität PDI auf. Im Vergleich zur Referenz und zur Probe A sind somit in der Probe B noch weniger einzelne Makromoleküle enthalten, die Makromoleküle hier sind jedoch noch größer als in der Referenz und in der Probe A.
Probe B: Mₙ = 499 g/mol, M_{w} = 4600 g/mol und PDI = 9,22.

Es konnte auch hier ein gutes Abgleitverhalten und eine gute Dehnbarkeit festgestellt werden. Der Materialnachfluss war jedoch nach wie vor unzureichend, um ein verbessertes Fehlerbild zu bewirken.

Da die Verwendung von größeren, längeren Makromolekülen (Erhöhung von M_{w} und damit auch von PDI) nicht zum gewünschten Erfolg der verbesserten Fehlstellenbildung führte, wurden Proben mit - im Vergleich zur Referenzprobe - kleineren Makromolekülen (kleineres M_{w} und PDI) geprüft.
Probe C: Mₙ = 512 g/mol, M_{w} = 3540 g/mol und PDI = 6,91.

Überraschenderweise konnte hier ein verbessertes Fehlerbild, trotz schlechteren Abgleitverhaltens, festgestellt werden. Bedingt durch die relativ kleinen Makromoleküle konnte ein zeitlich schnellerer Materialnachfluss erreicht werden. Durch die verringerte Dehnbarkeit erfolgte jedoch schon bei geringen Dehnungen ein Fadenabriss, da die großen Moleküle, welche als "Festigkeitsvermittler" für die notwendige Spaltüberbrückung sorgen, fehlen.

Daher wurde eine weitere Probe, Probe D, geprüft, welche über größere Makromoleküle verfügt, untersucht.
Probe D: Mₙ = 462 g/mol, M_{w} = 3710 g/mol und PDI = 8,05.

Diese Probe wies eine genügende Dehnbarkeit auf, um für eine ausreichende Spaltüberbrückung zu sorgen. Gleichzeitig zeigten sich ideale Tackeigenschaften, d.h. Mäanderstrukturen konnten nicht beobachtet werden. Die Molmassenverteilung war somit ideal in Bezug auf den Einsatz für einen Falzklebstoff, wo es auf ein besonders ausgewogenes Verhältnis zwischen Dehnbarkeit und Festigkeit der unausgehärteten Klebstoffmasse ankommt.

In weiteren Versuchen wurden die benannten Klebstoffproben nun weitergehend charakterisiert, um den beobachteten Effekt bei den Tack-Eigenschaften abzusichern.

Um die mechanische Belastung in der Falz nachzustellen, hat es sich als zweckmäßig erwiesen, auf Zugscherprüfungen zurück zu greifen. Da die Belastung in der realen Falz nicht wie bei der klassischen Zugscherprobe "parallel in entgegen gesetzter" Richtung angreift, sondern zumindest in einer Richtung, um einen Schädigungswinkel α versetzt, angreift, wurde dies durch entsprechend eingestellte Schädigungswinkel nachgestellt, siehe Figur 3. Bei der Klebstoffmodifikation der Probe D konnte die höchste Zugscherfestigkeit gemessen werden, was auch bei beölten Oberflächen festzustellen war.

Bei der Betrachtung der Bruchbilder zeigte sich folgendes Bild: Bei den Zugscherproben ohne Winkelfehler ist bei der Referenzprobe und der Probe D keine Mäanderstruktur zu erkennen. Die Referenzprobe weist ein kohäsives Bruchbild auf, während die Probe D einen kohäsiven Mischbruch mit teilweise substratnahem Versagen aufweist. Deutlich war jedoch die Mäanderstruktur bei der Referenzprobe bei einem Winkelfehler von 1 Grad zu erkennen, wobei mit weiter zunehmendem Winkelfehler noch deutlich ausgeprägtere Mäanderstrukturen zu erkennen waren.

Bei Probe D war hingegen keine Mäanderstruktur zu erkennen. Vielmehr war ein Zurückfließen des Klebstoffes zu beobachten, wodurch das festgestellte ebene, substratnah-kohäsive Bruchbild erklärt werden konnte.

### Bezugszeichenliste

10 Außenblech
12 Innenblech
14 Klebstoff
16 Klebstoffschicht

## Patentansprüche

1. Epoxidharz-Klebstoff zur Herstellung einer Falzverklebung, **dadurch gekennzeichnet, dass** der Epoxidharz-Klebstoff die folgende mittels Gelpermeationschromatographie bestimmte (siehe Anleitung dazu in der Beschreibung) Molmassenverteilung aufweist:
Mn: 400 - 600 g/mol
Mw: 3.000 - 4.000 g/mol
PDI: 6,0 - 8,5
wobei Mn für die zahlenmittlere molare Masse und Mw für die gewichtsmittlere molare Masse steht und sich der Polydispersitätsindex PDI aus dem Quotienten Mw/Mn ergibt.

2. Epoxidharz-Klebstoff nach Anspruch 1, **dadurch gekennzeichnet, dass** der Epoxidharz-Klebstoff die folgende Molmassenverteilung aufweist:
Mn: 400 - 550 g/mol
Mw: 3.500 - 4.000 g/mol
PDI: 6,5 - 8,5.

3. Epoxidharz-Klebstoff nach Anspruch 2, **dadurch gekennzeichnet, dass** der Epoxidharz-Klebstoff die folgende Molmassenverteilung aufweist:
Mn: 400 - 500 g/mol
Mw: 3.500 - 4.000 g/mol
PDI: 7,5 - 8,5.

4. Epoxidharz-Klebstoff nach Anspruch 1, **dadurch gekennzeichnet, dass** der Epoxidharz-Klebstoff ein hitzehärtender einkomponentiger Epoxidharz-Klebstoff ist.

5. Epoxidharz-Klebstoff nach Anspruch 1, **dadurch gekennzeichnet, dass** der Epoxidharz-Klebstoff ein Bisphenol-basierter Epoxidharz-Klebstoff ist.

6. Epoxidharz-Klebstoff nach Anspruch 5, **dadurch gekennzeichnet, dass** der Epoxidharz-Klebstoff ein Polymerisationskondensat aus Bisphenol A und Epichlorhydrin ist.

7. Verfahren zur Herstellung einer Falzverklebung, umfassend die Schritte:
a) Bereitstellen eines Epoxidharz-Klebstoffes nach einem der vorhergehenden Ansprüche;
b) Auftragen des Epoxidharz-Klebstoffes auf ein Innenblech und/oder Außenblech im Bereich der zu erstellenden Falzverklebung;
c) Bördeln des Außenblechs um das Innenblech, so dass im Innenraum des Bördelfalzes Epoxidharz-Klebstoff vorhanden ist;
d) Verpressen des Bördelfalzes; und
e) Thermisches Aushärten des Epoxidharz-Klebstoffes.

## Claims

1. Epoxy resin adhesive for the production of an adhesive folded-seam bond, **characterized in that** the epoxy resin adhesive has the following molar mass distribution determined by means of gel permeation chromatography (see relevant instructions in the Description):
Mn: from 400 to 600 g/mol
Mw: from 3000 to 4000 g/mol
PDI: from 6.0 to 8.5
where Mn is the number-average molar mass and Mw is the weight-average molar mass and the polydispersity index PDI is the quotient Mw/Mn.

2. Epoxy resin adhesive according to Claim 1, **characterized in that** the epoxy resin adhesive has the following molar mass distribution:
Mn: from 400 to 550 g/mol
Mw: from 3500 to 4000 g/mol
PDI: from 6.5 to 8.5.

3. Epoxy resin adhesive according to Claim 2, **characterized in that** the epoxy resin adhesive has the following molar mass distribution:
Mn: from 400 to 500 g/mol
Mw: from 3500 to 4000 g/mol
PDI: from 7.5 to 8.5.

4. Epoxy resin adhesive according to Claim 1, **characterized in that** the epoxy resin adhesive is a heat-curing single-component epoxy resin adhesive.

5. Epoxy resin adhesive according to Claim 1, **characterized in that** the epoxy resin adhesive is a bisphenol-based epoxy resin adhesive.

6. Epoxy resin adhesive according to Claim 5, **characterized in that** the epoxy resin adhesive is a polymerization condensate of bisphenol A and epichlorohydrin.

7. Process for the production of an adhesive folded-seam bond, comprising the steps of:
a) provision of an epoxy resin adhesive according to any of the preceding claims;
b) application of the epoxy resin adhesive to an internal metal sheet and/or external metal sheet in the region of the required adhesive folded-seam bond;
c) folding the external metal sheet around the internal metal sheet in a manner such that epoxy resin adhesive is present in the space within the folded region;
d) pressing of the folded region; and
e) thermal hardening of the epoxy resin adhesive.

## Revendications

1. Adhésif à base d'une résine époxyde pour la fabrication d'un collage par pliage, **caractérisé en ce que** l'adhésif à base d'une résine époxyde présente la distribution de masses molaires suivante déterminée par chromatographie par perméation de gel (voir les instructions relatives dans la description) :
Mn : 400 à 600 g/mol,
Mw : 3 000 à 4 000 g/mol,
PDI : 6,0 à 8,5,
Mn étant la masse molaire moyenne en nombre et Mw étant la masse molaire moyenne en poids, et l'indice de polydispersité PDI étant donné par le quotient Mw/Mn.

2. Adhésif à base d'une résine époxyde selon la revendication 1, **caractérisé en ce que** l'adhésif à base d'une résine époxyde présente la distribution de masses molaires suivante :
Mn : 400 à 550 g/mol,
Mw : 3 500 à 4 000 g/mol,
PDI : 6,5 à 8,5.

3. Adhésif à base d'une résine époxyde selon la revendication 2, **caractérisé en ce que** l'adhésif à base d'une résine époxyde présente la distribution de masses molaires suivante :
Mn : 400 à 500 g/mol,
Mw : 3 500 à 4 000 g/mol,
PDI : 7,5 à 8,5.

4. Adhésif à base d'une résine époxyde selon la revendication 1, **caractérisé en ce que** l'adhésif à base d'une résine époxyde est un adhésif à base d'une résine époxyde monocomposant durcissant à la chaleur.

5. Adhésif à base d'une résine époxyde selon la revendication 1, **caractérisé en ce que** l'adhésif à base d'une résine époxyde est un adhésif à base d'une résine époxyde à base de bisphénol.

6. Adhésif à base d'une résine époxyde selon la revendication 5, **caractérisé en ce que** l'adhésif à base d'une résine époxyde est un condensat de polymérisation de bisphénol A et d'épichlorhydrine.

7. Procédé de fabrication d'un collage par pliage, comprenant les étapes suivantes :
a) la préparation d'un adhésif à base d'une résine époxyde selon l'une quelconque des revendications précédentes ;
b) l'application de l'adhésif à base d'une résine époxyde sur une tôle intérieure et/ou une tôle extérieure dans la zone du collage par pliage à réaliser ;
c) le sertissage par repli de la tôle extérieure autour de la tôle intérieure, de sorte que l'adhésif à base d'une résine époxyde soit présent dans l'espace intérieur du pli de sertissage ;
d) la compression du pli de sertissage ; et
e) le durcissement thermique de l'adhésif à base d'une résine époxyde.
